# EUROPÄISCHE PATENTANMELDUNG

(11) **EP 2 520 348 A1**
(43) Veröffentlichungstag der Anmeldung: **07.11.2012**
(21) Anmeldenummer: 11164457.1
(22) Anmeldetag: 02.05.2011
(51) Int. Cl.: B01D 33/09, B01D 33/66

(54) **Filtereinrichtung, Verfahren zu deren Betrieb sowie deren Verwendung**

(71) Anmelder: SIEMENS AKTIENGESELLSCHAFT, 80333 München (DE)
(72) Erfinder: Peuker, Urs, 09599, Freiberg (DE)

(57) **Zusammenfassung**

Die Erfindung betrifft eine Filtereinrichtung (1, 1', 1'') zum Filtrieren einer Suspension (2), umfassend mindestens einen Filter (3) zur kontinuierlichen Erzeugung eines Filterkuchens (4) enthaltend Partikel aus der Suspension (2), wobei der mindestens eine Filter (3) eingerichtet ist, den Filterkuchen (4) nacheinander mindestens einer Dosiereinrichtung (20, 20') zur Aufgabe mindestens einer ersten Waschflüssigkeit (10, 10') auf den Filterkuchen (4) und mindestens einer Bedampfungseinheit (30) zur Bedampfung des Filterkuchens (4) mittels Dampf (31) zuzuführen, wobei die mindestens eine Dosiereinrichtung (20, 20') in eine erste Prozesskammer (6) integriert ist und die mindestens eine Bedampfungseinheit (30) in eine zweite Prozesskammer (7) integriert ist, und wobei die erste Prozesskammer (6) und die zweite Prozesskammer (7) zumindest durch mindestens eine Trennwand (8, 8a, 8b) voneinander getrennt sind.

## Beschreibung

Die Erfindung betrifft eine Filtereinrichtung zum Filtrieren einer Suspension, umfassend mindestens einen Filter zur kontinuierlichen Erzeugung eines Filterkuchens enthaltend Partikel aus der Suspension, wobei der mindestens eine Filter eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen. Die Erfindung betrifft weiterhin ein Verfahren zum Betrieb der Filtereinrichtung sowie eine Verwendung der Filtereinrichtung zur Extraktion von Kohlenwasserstoffen aus Ölsand.

Bei einem Ölsand handelt es sich üblicherweise um eine Mischung aus Tonsubstanz, Silikaten, Wasser und Kohlenwasserstoffen. Die in Ölsanden bis zu etwa 18 % enthaltene Ölphase aus diversen Kohlenwasserstoffen weist eine sehr unterschiedliche, oft Abbaugebiet-spezifische Zusammensetzung auf, wobei Bitumen, Rohöl und Asphalt enthalten sein können. Die Aufbereitung von Ölsand wird mit dem Ziel der Trennung der Gesteins- bzw. Sandfraktion umfassend Tonsubstanz und Silikate vom eigentlichen Wertstoff, also der Ölphase umfassend die Kohlenwasserstoffe, durchgeführt.

Der Abbau von Ölsanden erfolgt häufig im Tagebau. Bei einem Abbau aus tieferen Erdschichten erfolgt oft eine Vorbearbeitung, bei der Dampf in die Lagerstätte eingeleitet, die Kohlenwasserstoffe verflüssigt und an Bohrstellen gesammelt und zutage gefördert werden.

Die US 4,240,897 beschreibt ein Verfahren zur Extraktion von Bitumen aus Ölsand mittels heißen Wassers.

Die DE 10 2007 039 453 A1 beschreibt ein Verfahren zur Gewinnung von Bitumen aus Ölsand-Wasser-Mischungen mittels Flotation.

Gemäß dem sogenannten CLARK-ROWE-Prozess wird Ölsand mit Natronlauge gemischt und dadurch die Ölphase mobilisiert. Es erfolgt eine Phasentrennung wässerig-ölig primär durch Flotation. Der verbleibende Gesteins- oder Sandanteil enthält nach der Extraktion noch bis zu 10% der Ölphase, das zum Teil an der Oberfläche der Feinstpartikel adsorptiv gebunden ist. Dies führt zu einer sterischen Stabilisierung dieser Partikel im Abwasserstrom des Prozesses, wodurch eine Abtrennung dieser Partikel stark erschwert ist. Ferner wird eine merkliche Menge an Tonsubstanz durch eine adsorptive Anlagerung der Ölphase so stark hydrophobisiert, dass diese während einer Flotation in das Produkt, d.h. die abgetrennte Ölphase, gelangt. Dort stellt die Tonsubstanz eine qualitätsmindernde Verunreinigung dar, die nur schwer wieder abgeschieden werden kann. Je nach Ölsand-Zusammensetzung wird daher zur Gewinnung eines Barrels an Ölphase etwa die drei- bis vierfache Menge an nicht recycelbarem Frischwasser benötigt. Das Wasser wird mit der abgetrennten Gesteins- oder Sandfraktion in Auffangbecken zwischen- oder endgelagert.

Die US 4,968,412 beschreibt ein zweistufiges Verfahren zur Entfernung von Bitumen aus Ölsand, bei dem in einem ersten Schritt eine Zugabe von organischem Lösungsmittel und eine Abtrennung der Tonsubstanz erfolgen. In einem zweiten Schritt wird eine Waschung des aufbereiteten Ölsands mit Wasser unter Tensid-Zugabe durchgeführt.

Die US 3,542,666 beschreibt ein Verfahren zur Extraktion von Kohlenwasserstoffen aus Ölsand, bei dem organische Lösungsmittel in Kombination mit einer geringen Menge an Wasser in bestimmten Mengenverhältnissen mit dem Ölsand zu einer Suspension vermischt und der pH-Wert der Suspension auf mindestens 5 eingestellt wird, bevor eine Filtration der Suspension erfolgt.

Die nicht vorveröffentlichte europäische Patentanmeldung mit dem Aktenzeichen EP 10156735 beschreibt ein Verfahren zur Extraktion von Kohlenwasserstoffen aus Ölsand. Es hat sich gezeigt, dass eine Verwendung rein organischer Extraktionsmittel dazu führt, dass Feinstbestandteile im Ölsand, die überwiegend aus Tonsubstanz bestehen, agglomerieren und die Agglomerate zudem ein hydrophobes Verhalten zeigen. Dies ermöglicht eine Abtrennung der Tonsubstanz mit der Gesteins- und Sandfraktion mittels einer mechanischen Fest-Flüssig-Filtration. Dabei wird der Ölsand mit organischem Lösungsmittel suspendiert und mittels eines kontinuierlichen Filters, insbesondere Trommelfilters, filtriert. Der gebildete Filterkuchen wird in einer Filtereinheit mittels mindestens einer ersten Waschflüssigkeit gewaschen und anschließend mit einem, aus einer zweiten Waschflüssigkeit gebildeten Dampf bedampft, wobei im Filterkuchen noch vorhandene Reste der ersten Waschflüssigkeit(en) inklusive eventueller Kohlenwasserstoffreste aus dem Ölsand ausgetrieben werden. Der Filterkuchen wird dabei gereinigt und weitgehend entfeuchtet. Dabei kann die Aufgabe der ersten Waschflüssigkeit(en) auf den Filterkuchen mittels einer Dosiereinrichtung erfolgen, die z.B. durch Düsen realisiert ist. Die Düsen werden hier in eine Kammer oder Haube einer Bedampfungseinheit zur Bedampfung des Filterkuchens mit dem Dampf aus zweiter Waschflüssigkeit eingebaut.

Das Austreiben der Restmenge an erster Waschflüssigkeit aus dem Filterkuchen wird in der Literatur auch als Dampf-Druckfiltration (engl.: Steam Pressure Filtration) bezeichnet.

Die Grundlagen zur Dampf-Druckfiltration sind bekannt und beispielsweise in den folgenden Veröffentlichungen beschrieben:
"Steam Pressure Filtration: Mechanical-Thermal Dewatering Process", U.A. Peuker, W. Stahl, Drying Technology, 19(5), Seiten 807-848 (2001);
"Applying mechanical-thermal fitration processes for purification, e.g. solvent removal", U. A. Peuker, Proc. Filtech Europe, 12.-23. Oktober 2003, Düsseldorf, Deutschland;
"Abtrennung von organischen Lösemitteln aus Filterkuchen mit Dampf", U.A. Peuker, F & S Filtrieren und Separieren, Jahrgang 17 (2003), Nr. 5, Seiten 230 bis 236;
"Steam Pressure Filtration for the treatment of limey soils contaminated with aliphatic hydrocarbons", von M. Bottlinger, H. B. Bradl, A. Krupp, U. Peuker, 2nd Int. Containment & Remediation Technology Conference, 10.-13. Juni 2001, Orlando, Florida, USA;

Der Filterkuchen, umfassend die Gesteins- oder Sandfraktion des Ölsands, wird beim Hindurchdrücken des Dampfs von erster Waschflüssigkeit befreit und gleichzeitig eine darin gelöste Menge an Kohlenwasserstoffen bzw. Ölphase ausgetrieben. Dies erhöht die Ausbeute an Kohlenwasserstoffen bzw. verbessert den Trennungsgrad auf etwa 95 bis 98 %, welcher den Trennerfolg charakterisiert.

Es hat sich gezeigt, dass eine kombinierte Bauweise von Dosiereinrichtung und Bedampfungseinheit verwendbar ist, wenn die über die Dosiereinrichtung zugeführte erste Waschflüssigkeit und die zweite Waschflüssigkeit, aus der der Dampf gebildet wird, identisch oder zumindest hinsichtlich ihrer Siedetemperaturen ähnlich sind, d.h. sich nicht um mehr als etwa 5°C in den Siedetemperaturen unterscheiden.

Werden aber erste und zweite Waschflüssigkeiten eingesetzt, die sich in ihren Siedetemperaturen um mehr als etwa 5°C unterscheiden, kommt es in der Kammer oder Haube der Bedampfungseinheit zu unerwünschten Kondensations- oder Verdampfungseffekten.

Wenn in diesem Dokument von einer Siedetemperatur die Rede ist, ist darunter immer die Siedetemperatur eines Stoffs unter Normaldruck zu verstehen.

Wird beispielsweise als erste Waschflüssigkeit ein organisches Lösungsmittel, wie z.B. Ethanol mit einer Siedetemperatur von 78°C, auf den Filterkuchen aufgegeben, und als zweite Waschflüssigkeit Wasser mit einer Siedetemperatur von 100°C verdampft und der Filterkuchen mit dem Wasserdampf beaufschlagt, so verdampft in der Kammer oder Haube bereits ein Teil der ersten Waschflüssigkeit, bevor sie den Filterkuchen überhaupt erreicht hat. Dies mindert die Waschleistung und führt zudem zu einem unerwünschten Druckaufbau in der Kammer oder Haube.

Wird umgekehrt als erste Waschflüssigkeit ein organisches Lösungsmittel, wie z.B. Toluol mit einer Siedetemperatur von 110°C, auf den Filterkuchen aufgegeben und als zweite Waschflüssigkeit Wasser mit einer Siedetemperatur von 100°C verdampft und der Filterkuchen mit dem Wasserdampf beaufschlagt, so kondensiert in der Kammer oder Haube bereits ein Teil des Wasserdampfs an der ersten Waschflüssigkeit, bevor er den Filterkuchen überhaupt erreicht hat. Dies behindert die Entfeuchtung des Filterkuchens und führt zudem zu einem unerwünschten Druckabbau in der Kammer oder Haube.

Es ist Aufgabe der Erfindung, eine Filtereinrichtung zum Filtrieren einer Suspension bereitzustellen, mit welcher sich in ihren Siedetemperaturen um mehr als etwa 5°C unterscheidende Waschflüssigkeiten als erste und zweite Waschflüssigkeiten eingesetzt werden können. Weiterhin ist es Aufgabe der Erfindung, ein Verfahren zum Betrieb und eine Verwendung einer solchen Filtereinrichtung anzugeben.

Die Aufgabe wird für die Filtereinrichtung zum Filtrieren einer Suspension, umfassend mindestens einen Filter zur kontinuierlichen Erzeugung eines Filterkuchens enthaltend Partikel aus der Suspension, wobei der mindestens eine Filter eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen, dadurch gelöst, dass die mindestens eine Dosiereinrichtung in eine erste Prozesskammer integriert ist und die mindestens eine Bedampfungseinheit in eine zweite Prozesskammer integriert ist, wobei die erste Prozesskammer und die zweite Prozesskammer zumindest durch mindestens eine Trennwand voneinander getrennt sind.

Die Aufgabe wird für das Verfahren zum Betreiben einer erfindungsgemäßen Filtereinrichtung dadurch gelöst, dass die mindestens eine erste Waschflüssigkeit und eine zweite Waschflüssigkeit zur Erzeugung des Dampfs um mindestens 5°C unterschiedliche Siedetemperaturen aufweisen.

Die gemäß der erfindungsgemäßen Filtereinrichtung realisierte räumliche Trennung zwischen der Dosiereinrichtung und der Bedampfungseinheit ermöglicht einen weitgehenden Ausschluss unerwünschter Wechselwirkungen zwischen der mindestens einen ersten Waschflüssigkeit und dem Dampf aus zweiter Waschflüssigkeit. Die mindestens eine Trennwand bewirkt eine Abschottung oder Abdichtung zwischen der ersten und zweiten Prozesskammer, so dass erste Waschflüssigkeit(en) und Dampf räumlich getrennt voneinander gehalten werden und nicht mehr in direkten Kontakt zueinander gelangen. Dadurch können problemlos erste und zweite Waschflüssigkeiten eingesetzt werden, die sich in ihren Siedetemperaturen um mehr als 5°C, insbesondere um mehr als 10°c, unterscheiden. Unerwünschte Kondensations-oder Verdampfungseffekte treten nicht mehr auf.

Bei dem Verfahren wird die zweite Waschflüssigkeit vorzugsweise aus Wasser gebildet, so dass Wasserdampf erzeugt und auf den Filterkuchen aufgegeben wird. Der Wasserdampf wird bevorzugt als Sattdampf oder leicht überhitzter Dampf zugeführt. Die mindestens eine erste Waschflüssigkeit wird bevorzugt aus einem organischen Lösungsmittel gebildet. Dabei können mittels der Dosiereinrichtung nacheinander unterschiedliche erste Waschflüssigkeiten auf den Filterkuchen aufgegeben werden. Details hierzu können der eingangs genannten EP 10156735 entnommen werden. Ein Einsatz von organischen Lösungsmitteln als erste Waschflüssigkeit(en) und von Wasser als zweite Waschflüssigkeit ist besonders bevorzugt.

Die Dosiereinrichtung umfasst bevorzugt eine Anzahl an Düsen in der ersten Prozesskammer zur Aufgabe der ersten Waschflüssigkeit(en) auf den Filterkuchen, wobei die Düsen bevorzugt in einem Bereich in der ersten Prozesskammer angeordnet sind, der einem Eintrittsbereich des Filterkuchens in die erste Prozesskammer zugeordnet ist. Die auf den Filterkuchen aufgebrachte erste Waschflüssigkeit bildet einen Film, der vorzugsweise entgegen der Filterbewegung strömt.

Optional weist die erste Prozesskammer eine Druckausgleichskappe zur Filterumgebung hin auf, um einen eventuellen unerwünschten Druckaufbau in der ersten Prozesskammer zu verhindern. In der ersten Prozesskammer herrscht somit bevorzugt Umgebungsdruck.

Der Durchtrittswiderstand von Dampf von der zweiten Prozesskammer in Richtung der ersten Prozesskammer ist dabei im Hinblick auf einen Durchtrittswiderstand von Dampf von der zweiten Prozesskammer in die Umgebung erhöht. Dies wird beispielsweise dadurch realisiert, dass der Spalt zwischen Filterkuchen und zweiter Prozesskammer am Austritt des Filterkuchens aus der zweiten Prozesskammer größer dimensioniert wird als im Bereich des Eintritts des Filterkuchens in die zweite Prozesskammer. So strömt der Dampf, wenn dieser nicht durch den Filterkuchen und das Filtergewebe abgesaugt wird, von der ersten Prozesskammer weggerichtet aus der zweiten Prozesskammer aus.

Es ist von Vorteil, wenn eine Spaltweite SW zwischen dem mindestens einen Filter und der mindestens einen Trennwand verstellbar ist. Dadurch lässt sich die Abdichtung zwischen erster und zweiter Prozesskammer optimal an die Dicke des Filterkuchens anpassen, der auf einem Filtergewebe des Filters gebildet wird. Dies ist beispielsweise dann sinnvoll oder notwendig, wenn sich Prozessparameter verändern, wie beispielsweise ein Feststoffgehalt der zu filtrierenden Suspension, eine Drehgeschwindigkeit des Filters, der Zustand des Filtergewebes usw.

Die Spaltweite SW lässt sich durch Veränderung der Position der mindestens einen Trennwand relativ zum Filter verändern. Dabei wird vorzugsweise die mindestens eine Trennwand bewegt, jedoch kann alternativ oder in Kombination auch die Position des Filters verändert werden.

Besonders bevorzugt ist es dabei, wenn mindestens eine Messeinrichtung zur Erfassung einer Dicke d des Filterkuchens vorhanden ist und die Spaltweite SW zwischen dem mindestens einen Filter und der mindestens einen Trennwand in Abhängigkeit der Dicke des Filterkuchens verstellbar ist. Dies ermöglicht eine automatische Online-Einstellung des Abstands zwischen Trennwand und Filterkuchen, so dass eine Abdichtung zwischen erster und zweiter Prozesskammer zu jeder Zeit und auch unter schwankenden Prozessbedingungen optimal ist.

Es hat sich bewährt, wenn die mindestens eine Trennwand an ihrer dem Filter zugewandten Seite mindestens eine bewegliche Dichtungseinheit umfasst. Diese bewegliche Dichtungseinheit kann durch eine bewegliche Klappe, eine elastische Dichtlippe, insbesondere eine Lamellendichtung aus Elastomermaterial, und dergleichen gebildet sein. Auf kurzfristige Änderungen des Abstands zwischen Trennwand und Filterkuchen kann eine solche bewegliche Dichtungseinheit schnell und reversibel reagieren und so eine permanente Abdichtung zwischen Filterkuchen und Trennwand bereitstellen.

Die erste Prozesskammer und die zweite Prozesskammer sind in einer bevorzugten Ausgestaltung der Filtereinrichtung durch eine Zwischenkammer voneinander getrennt, wobei eine erste Trennwand zwischen der ersten Prozesskammer und der Zwischenkammer und eine zweite Trennwand zwischen der Zwischenkammer und der zweiten Prozesskammer angeordnet ist.

Dies erhöht den Abstand zwischen erster und zweiter Prozesskammer und verbessert damit auch die Abdichtung zwischen diesen.

Die Zwischenkammer ist bevorzugt mit mindestens einer Gaszuführleitung zur Zuführung eines Gases in die Zwischenkammer verbunden. Als Gas wird beispielsweise Luft oder Stickstoff eingeblasen. Das Gas wird dabei in einer Menge eingeblasen, die geeignet ist, einen erhöhten Druck in der Zwischenkammer - zumindest im Hinblick auf einen in der zweiten Prozesskammer vorherrschenden Druck- zu erzeugen. Das eingeblasene Gas wird von der Zwischenkammer in die zweite Prozesskammer und optional auch die erste Prozesskammer gedrückt. Ein Übertritt von Dampf aus der zweiten Prozesskammer in die Zwischenkammer und in Folge in die erste Prozesskammer wird zuverlässig verhindert.

Dabei hat es sich bewährt, wenn in der Zwischenkammer und der zweiten Prozesskammer der Filtereinrichtung jeweils mindestens ein Gasdrucksensor angeordnet ist.

Mittels der Gasdrucksensoren wird bevorzugt jeweils ein erster Gasdruck in der Zwischenkammer und ein zweiter Gasdruck in der zweiten Prozesskammer erfasst und eine Gaszufuhr zur Zwischenkammer derart geregelt, dass der erste Gasdruck höher als der zweite Gasdruck ist. Vorzugsweise wird der erste Gasdruck in der Zwischenkammer um bis zu 50 mbar, insbesondere um bis zu 5 mbar, erhöht gegenüber dem zweiten Gasdruck in der zweiten Prozesskammer eingestellt.

Dabei kann beispielsweise ein Ventil oder ein Gebläse zur Zuführung von Gas zur Zwischenkammer vorhanden sein, dessen Ventilstellung oder Gebläseleistung zur Einstellung des ersten Gasdrucks in der Zwischenkammer geregelt wird.

Alternativ oder in Kombination dazu hat es sich als vorteilhaft erwiesen, wenn zumindest der zweiten Trennwand an ihrer der Zwischenkammer zugewandten Seite mindestens ein Temperatursensor zugeordnet ist. Mittels des mindestens einen Temperatursensors wird mindestens eine Temperatur gemessen und vorzugsweise eine Gaszufuhr zur Zwischenkammer und/oder eine Dampfzufuhr zur zweiten Prozesskammer in Abhängigkeit von der gemessenen Temperatur geregelt. Ist ein Temperaturanstieg am Temperatursensor zu verzeichnen, so tritt Dampf aus der zweiten Prozesskammer aus und dringt in die Zwischenkammer ein. Dem kann einerseits dadurch entgegen gewirkt werden, dass der erste Gasdruck in der Zwischenkammer erhöht und mehr Gas in die Zwischenkammer eingeblasen wird.

Andererseits kann, bei gleichbleibender Gaszufuhr in die Zwischenkammer, die Menge an in die zweite Prozesskammer eingeführtem Dampf verringert werden, um den zweiten Gasdruck zu senken und den Übertritt von Dampf in die Zwischenkammer zu unterbinden.

Insbesondere ist der mindestens eine Filter der Filtereinrichtung ein Drehfilter. Besonders bevorzugt ist der mindestens eine Filter ein Trommelfilter. Der Filter kann aber auch als Scheibenfilter, Panfilter oder Bandfilter ausgebildet sein.

Bei dem erfindungsgemäßen Verfahren wird die zu filtrierende Suspension bevorzugt aus Ölsand und mindestens einem organischen Lösungsmittel gebildet.

Die Verwendung der erfindungsgemäßen Filtereinrichtung zur Extraktion von Kohlenwasserstoffen aus Ölsand, wobei aus dem Ölsand und mindestens einem organischen Lösungsmittel die zu filtrierende Suspension gebildet wird, hat sich bewährt.

Zu weiteren Details hierzu wird auf die eingangs genannte EP 10156735 verwiesen.

Die Dicke des gebildeten Filterkuchens liegt bevorzugt im Bereich von 2 bis 100 mm, vorzugsweise im Bereich von 5 bis 25 mm. Ein aus Rückständen des Ölsands gebildeter Filterkuchen ist nach seiner Bedampfung mit Wasserdampf frei von organischen Lösungsmitteln und flüchtigen Kohlenwasserstoffen und kann unmittelbar, z.B. im Bereich der Abbaustelle des Ölsands, ins Erdreich rückverfüllt werden. Eine separate Lagerung der abgetrennten Gesteins- oder Sandfraktion entfällt. Lediglich ein geringer Anteil an schwerflüchtigen Kohlenwasserstoffen kann noch enthalten sein.

Als organisches Lösungsmittel, welches mit dem Ölsand suspendiert wird, wird vorzugsweise ein Gemisch von mindestens zwei unterschiedlichen organischen Lösungsmitteln eingesetzt. Besonders bevorzugt sind hierbei Gemische umfassend mindestens zwei organische Lösungsmittel aus der Gruppe Toluol, Benzol, Heptan und Hexan, aber auch andere organische Lösungsmittel sind hier einsetzbar. Auch ein reines organisches Lösungsmittel, vorzugsweise in Form von Toluol oder Heptan, kann alternativ zusammen mit dem Ölsand zur Bildung der zu filtrierenden Suspension eingesetzt werden. Ebenso ist es möglich, technische Lösungsmittel, wie Paraffin, Naphta, Benzin oder Kerosin mit herstellungsbedingt schwankender chemischer Zusammensetzung einzusetzen.

Die chemische Zusammensetzung der eingesetzten organischen Lösungsmittel und der ersten Waschflüssigkeit(en) wird dabei bevorzugt in Abhängigkeit von einem Gehalt des Ölsands an Molekülen enthaltend ≥ 10 Kohlenstoffatome, insbesondere voluminösen Molekülen aus der Gruppe der Cycloalkane und/oder Naphthensäuren und/oder Asphaltene, ausgewählt. Dazu erfolgt vorzugsweise eine Bestimmung des Gehalts des Ölsands an solchen Molekülen.

Bei einer rein aliphatischen Extraktion hat sich nämlich eine Löslichkeit von derartigen voluminösen Molekülen in einigen organischen Lösungsmitteln als problematisch erwiesen. So fallen beispielsweise bei einem Einsatz von Paraffinen als Extraktionsmittel die Cycloalkane und Naphthensäuren als gelartige Feststoffstrukturen aus. Dies reduziert die Ausbeute und verschlechtert die Prozessierbarkeit der Ölphase.

Die FIGen 1 bis 6 sollen mögliche erfindungsgemäße Filtereinrichtungen und Verfahren für deren Betrieb beispielhaft erläutern. So zeigt
- FIG 1: eine erste Filtereinrichtung mit einem kontinuierlichen Filter in Trommelform im Schnittbild;
- FIG 2: eine zweite Filtereinrichtung mit einem kontinuierlichen Filter in Trommelform und einer verstellbaren Trennwand im Schnittbild;
- FIG 3: einen vergrößerten Ausschnitt aus FIG 2 im Bereich der Trennwand;
- FIG 4: eine dritte Filtereinrichtung mit einem kontinuierlichen Filter in Trommelform und einer Zwischenkammer im Schnittbild;
- FIG 5: eine mögliche Ausgestaltung einer Filtereinrichtung ähnlich FIG 4 im Bereich der Zwischenkammer; und
- FIG 6: eine weitere mögliche Ausgestaltung einer Filtereinrichtung ähnlich FIG 4 im Bereich der Zwischenkammer.

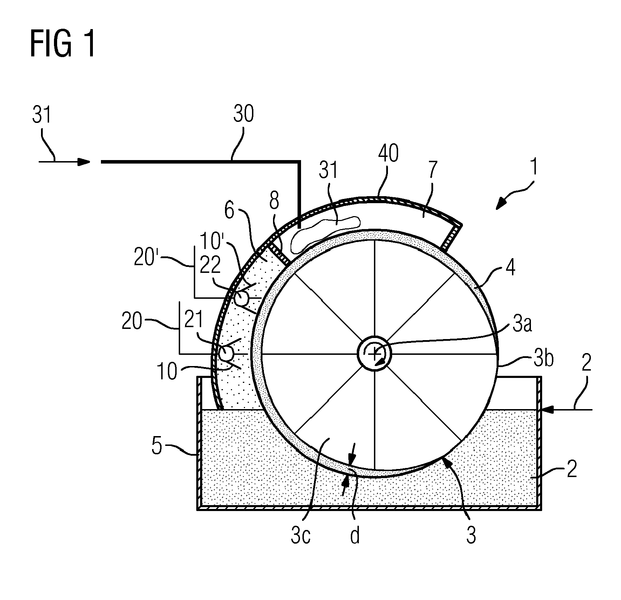

FIG 1 zeigt schematisch eine erste Filtereinrichtung 1 zum Filtrieren einer Suspension 2 im Schnittbild. Die Filtereinrichtung 1 umfasst hier einen Behälter 5 zur Aufnahme der Suspension 2 sowie einen Filter 3 in Form eines kontinuierlichen Drehfilters. Der Drehfilter ist hier eine mit Filtergewebe 3b bespannte Trommel, also ein Trommelfilter, mit mehreren, voneinander getrennten Filterzellen 3c. Der Trommelfilter taucht in die Suspension 2 ein und wird in Pfeilrichtung um eine Drehachse 3a rotiert (siehe Pfeil), wobei zumindest in einem Teil der Filterzellen 3c ein Druck herrscht, der geringer ist als jener oberhalb des Filtergewebes 3b. Dadurch wird Flüssigkeit aus der Suspension 2 durch das Filtergewebe 3b in die jeweilige Filterzelle 3c abgesaugt und es bildet sich auf dem Filtergewebe 3b ein Filterkuchen 4 aus, dessen Dicke d mit zunehmender Verweilzeit des Filtergewebes 3b in der Suspension 2 zunimmt. Der Filterkuchen 4 umfasst filtrierbare Partikel der Suspension 2. Bei Einsatz einer Suspension 2, die beispielsweise aus Ölsand und organischen Lösungsmitteln gebildet ist, enthält der Filterkuchen 4 Tonsubstanz-Agglomerate sowie sonstige Partikel der Gesteins- und Sandfraktion des Ölsands. Es wird eine Extraktphase umfassend Kohlenwasserstoffe aus dem Ölsand und organische Lösungsmittel abgetrennt und im Bereich der Drehachse 3a des Trommelfilters aus den Filterzellen 3c abgeführt.

Aufgrund der kontinuierlichen Rotation des Trommelfilters um die Drehachse 3a taucht der gebildete Filterkuchen 4 an einer Seite aus der Suspension 2 auf und gelangt zuerst in eine erste Prozesskammer 6, in welche eine Dosiereinrichtung 20, 20' umfassend Düsen 21, 22 zur Aufgabe mindestens einer ersten Waschflüssigkeit 10, 10' auf den Filterkuchen 4 angeordnet ist.

Danach wird der Filterkuchen 4 aufgrund der Drehbewegung des Trommelfilters einer Bedampfungseinheit 30 zur Bedampfung des Filterkuchens 4 mittels Dampf 31 zugeführt. Die Bedampfungseinheit 30 ist hier in Form eines Rohrs zur Dampfzuführung ausgeführt und in eine zweite Prozesskammer 7 integriert. Die Bedampfungseinheit kann alternativ auch in Form einer speziellen Aufgabevorrichtung, wie beispielsweise einer Expansionskammer, ausgebildet sein.

Die erste Prozesskammer 6 und die zweite Prozesskammer 7 sind dabei durch eine Haube 40 und voneinander getrennt durch eine mit der Haube 40 verbundene Trennwand 8 ausgebildet. Die Trennwand 8 verhindert einen direkten Kontakt zwischen der ersten Waschflüssigkeit 10, 10' und dem Dampf 31 und damit unerwünschte Kondensations- oder Verdampfungseffekte.

Mittels der Dosiereinrichtung 20, 20' wird hier über die Düsen 21, 22 als erste Waschflüssigkeit 10, 10' ein organisches Lösungsmittel, beispielsweise aus einer Mischung von Toluol und Heptan, auf einer dem Filtergewebe 3b abgewandten Seite auf den Filterkuchen 4 aufgegeben. Die erste Waschflüssigkeit 10 verdrängt eine Restmenge an organischem Lösungsmittel, mit welchem die Suspension 2 gebildet wurde, aus dem offenen Porenraum des Filterkuchens 4. Mittels der Dosiereinrichtung 20, 20' werden bevorzugt mehrere unterschiedliche erste Waschflüssigkeiten 10, 10' nacheinander auf den Filterkuchen 4 aufgebracht.

Der Filterkuchen 4 wird beispielsweise auf seiner dem Filtergewebe 3b abgewandten Seite zuerst mittels der Düsen 21 mit einer ersten Waschflüssigkeit 10, gebildet aus einer Mischung von Toluol und Heptan, und anschließend mittels der Düsen 22 mit einer weiteren ersten Waschflüssigkeit 10', aus reinem Hexan oder Heptan, gewaschen.

Die Haube 40 umgibt einen Teil des Trommelfilters. Der Dampf 31, hier in Form von Wasserdampf, wird über dem Filterkuchen 4 in die zweite Prozesskammer 7 eingeleitet und durch diesen hindurch abgesaugt. Dabei wird eine sich noch im Filterkuchen 4 befindende Restmenge an erster Waschflüssigkeit umfassend aus dem Ölsand stammende Reste von Kohlenwasserstoffen entfernt. Der Dampf 31 wird durch den Filterkuchen 4 gedrückt und der Filterkuchen 4 entfeuchtet.

Die jeweils in die Filterzellen 3c eindringenden Mengen an Extraktphase werden im Bereich der Drehachse 3a gesammelt und aus der ersten Filterapparatur 1 mittels einer hier nicht im Detail dargestellten Einheit, beispielsweise in Form eines Rohres, abgeführt. Als Filterrückstand verbleibt ein weitgehend entfeuchteter, lösemittelfreier Filterkuchen 4, der vom Filtergewebe 3b beispielsweise durch Druckluft und/oder einen mechanischen Abstreifer entfernt und z.B. am Abbauort des Ölsands 1 ins Erdreich rückverfüllt werden kann.

Die mittels der ersten Filtereinrichtung 1 gewonnene Extraktphase wird zu einer Aufbereitungsanlage gefördert, welche die aus dem Ölsand extrahierten Kohlenwasserstoffe abtrennt und die eingesetzten organischen Lösungsmittel möglichst sortenrein trennt. Die sortenrein zurückgewonnenen Lösungsmittel können wiederverwendet werden. Dies ist hier allerdings der Übersichtlichkeit halber nicht im Detail dargestellt. Es wird hierzu auf den Inhalt der EP 10156735 verwiesen.

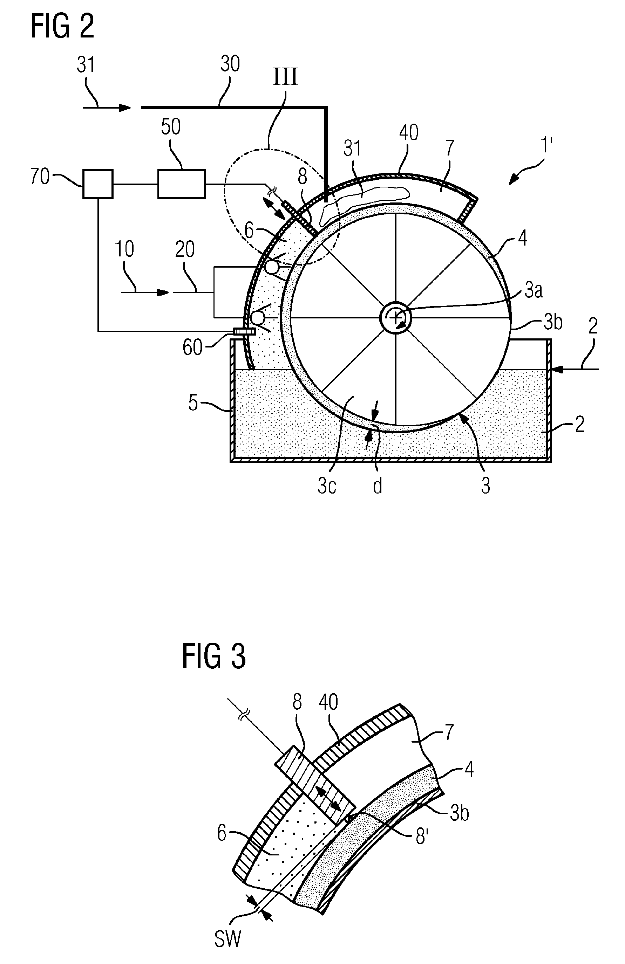

FIG 2 zeigt eine zweite Filtereinrichtung 1' ähnlich zu der in FIG 1, bei welcher eine Spaltweite SW (siehe auch FIG 3) zwischen dem Filter 3 und der Trennwand 8 verstellbar ist (siehe Doppelpfeil). Gleiche Bezugszeichen wie in FIG 1 bezeichnen gleiche Elemente. Es ist hier weiterhin eine Messeinrichtung 60 zur Erfassung der Dicke d des Filterkuchens 4 vorhanden, welche den aktuellen Messwert für die Dicke d an eine Steuer- und/oder Regeleinrichtung 70 übermittelt. Diese errechnet aus dem Messwert für die Dicke d des Filterkuchens 4 ein Signal zur Einstellung der Spaltweite SW zwischen Filter 3 und Trennwand 8, welches an eine Antriebseinheit 50 übermittelt wird. Die Antriebseinheit 50 bewirkt die Einstellung des, an die aktuelle Dicke d des Filterkuchens 4 angepasste Spaltweite SW. Die Position der Trennwand 8 wird in Abhängigkeit der Dicke d des Filterkuchens "online" eingestellt und wird somit durchgängig minimiert. Bei der Messeinrichtung 60 zur Erfassung der Dicke d des Filterkuchens 4 kann es sich um eine optische Messeinrichtung oder eine mechanische Messeinrichtung handeln.

In FIG 3 ist ein Ausschnitt aus FIG 2 im Bereich der Trennwand 8 zur besseren Übersicht vergrößert dargestellt. Dabei ist erkennbar, dass die Trennwand 8 an ihrer dem Filter 3 zugewandten Seite eine bewegliche Dichtungseinheit 8' in Form einer elastischen Dichtlippe aufweist.

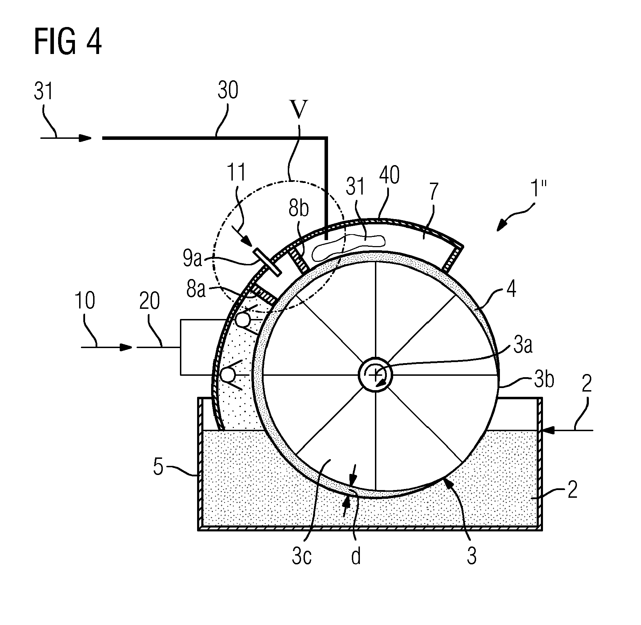

FIG 4 zeigt eine dritte Filtereinrichtung 1'' ähnlich der in FIG 1. Gleiche Bezugszeichen wie in FIG 1 bezeichnen gleiche Elemente. Die erste Prozesskammer 6 und die zweite Prozesskammer 7 sind hier durch eine Zwischenkammer 9 voneinander getrennt, wobei eine erste Trennwand 8a zwischen der ersten Prozesskammer 6 und der Zwischenkammer 9 und eine zweite Trennwand 8b zwischen der Zwischenkammer 9 und der zweiten Prozesskammer 7 angeordnet ist. Die Zwischenkammer 9 ist mit einer Gaszuführleitung 9a zur Zuführung eines Gases 11 in die Zwischenkammer 9 verbunden.

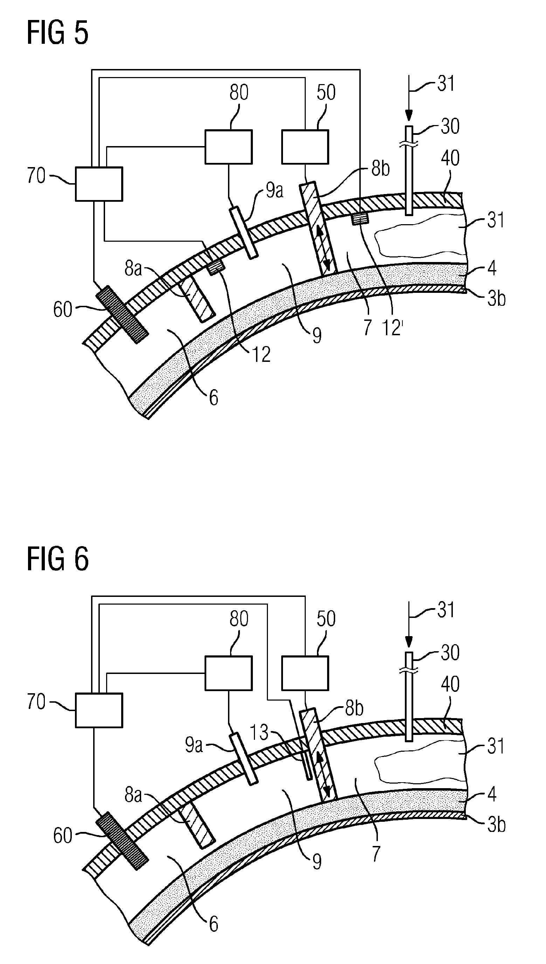

FIG 5 zeigt eine mögliche Ausgestaltung eines Ausschnitts aus einer Filtereinrichtung ähnlich FIG 4 im Bereich der Zwischenkammer 9, wobei hier die Möglichkeit dargestellt ist, dass die zweite Trennwand 8b, wie die Trennwand 8 in FIGen 2 und 3 dargestellt, beweglich ausgeführt ist. Gleiche Bezugszeichen wie in den FIGen 1 bis 4 kennzeichnen gleiche Elemente. In der Zwischenkammer 9 und der zweiten Prozesskammer 7 ist jeweils ein Gasdrucksensor 12, 12' angeordnet. Eine Steuer- und/oder Regeleinrichtung 70 ist mit den Gasdrucksensoren 12, 12', dem Gebläse 80, der Messeinrichtung 60 und der Antriebseinheit 50 datentechnisch verbunden. Mittels der Gasdrucksensoren 12, 12' wird jeweils ein erster Gasdruck in der Zwischenkammer 9 und ein zweiter Gasdruck in der zweiten Prozesskammer 7 erfasst und eine Gaszufuhr zur Zwischenkammer 9 über ein Gebläse 80 derart geregelt, dass der erste Gasdruck höher als der zweite Gasdruck ist. Dadurch verbleibt der Dampf 31 in der zweiten Prozesskammer 7.

Es erfolgt demnach eine Erfassung der Dicke d des Filterkuchens 4 und eine Positionierung der zweiten Trennwand 8b über die Antriebseinheit 50 mittels der Steuer- und/oder Regeleinrichtung 70, wie auch eine Einstellung der Menge an in die Zwischenkammer 9 eingeblasenem Gas 11 über das Gebläse 80 in Abhängigkeit des ersten und zweiten Gasdrucks.

In einer alternativen, hier nicht dargestellten Ausführungsform kann der erste Gasdruck in der Zwischenkammer 9 konstant gehalten werden und die Zufuhr an Dampf 31 in die zweite Prozesskammer verringert werden, bis der erste Gasdruck in der Zwischenkammer 9 höher ist als der zweite Gasdruck in der zweiten Prozesskammer 7. Dazu kann beispielsweise ein über die Steuer- und/oder Regeleinrichtung 70 in Abhängigkeit von erstem und zweitem Gasdruck verstellbares Ventil in der Zuleitung für den Dampf 31 vorgesehen sein.

FIG 6 zeigt eine weitere mögliche Ausgestaltung eines Ausschnitts aus einer Filtereinrichtung ähnlich FIG 4 im Bereich der Zwischenkammer 9, wobei hier ebenfalls die Möglichkeit dargestellt ist, dass die zweite Trennwand 8b, wie die Trennwand 8 in den FIGen 2 und 3, beweglich ausgeführt ist. Gleiche Bezugszeichen wie in den FIGen 1 bis 5 kennzeichnen gleiche Elemente. In der Zwischenkammer 9 ist hier ein Temperatursensor 13 angeordnet. Mittels des Temperatursensors 13 wird eine Temperatur im Bereich der zweiten Trennwand 8b gemessen und eine Gaszufuhr zur Zwischenkammer 9 über ein Gebläse 80 in Abhängigkeit von der Temperatur geregelt. Dazu ist eine Steuer- und/oder Regeleinrichtung 70 datentechnisch mit dem Temperatursensor 13 und dem Gebläse 80 verbunden.

Es erfolgt demnach, wie für FIG 5 beschrieben, eine Erfassung der Dicke d des Filterkuchens 4 und eine Positionierung der zweiten Trennwand 8b über die Antriebseinheit 50 mittels der Steuer- und/oder Regeleinrichtung 70, wie auch eine Einstellung der Menge an in die Zwischenkammer 9 eingeblasenem Gas 11 über das Gebläse 80 in Abhängigkeit der gemessenen Temperatur im Bereich der zweiten Trennwand 8b.

In einer alternativen, hier nicht dargestellten Ausführungsform kann die Gaszufuhr in die Zwischenkammer 9 konstant gehalten werden und die Zufuhr an Dampf 31 in die zweite Prozesskammer verringert werden, bis die Temperatur am Temperatursensor 13 einen gewünschten Wert erreicht und kein Dampf 31 mehr in die Zwischenkammer 9 eintritt. Dazu kann beispielsweise ein über die Steuer- und/oder Regeleinrichtung 70 in Abhängigkeit von der Temperatur verstellbares Ventil in der Zuleitung für den Dampf 31 vorgesehen sein.

Die FIGen 1 bis 6 zeigen lediglich Beispiele für mögliche erfindungsgemäße Filtereinrichtungen und Verfahren zu deren Betrieb. Ein Fachmann ist beispielsweise ohne weiteres in der Lage, anstelle des hier beispielhaft gezeigten Trommelfilters einen Bandfilter, Scheibenfilter oder anderen Drehfilter einzusetzen. Weiterhin können bei einem Vorhandensein von mehreren Trennwänden, wie in den FIGen 4 bis 6 dargestellt, alle oder nur ausgewählte Trennwände relativ zum Filter beweglich sein. Dabei kann eine zeitliche Korrelation zwischen den Bewegungsabläufen nacheinander zu bewegender Trennwände realisiert sein.

## Patentansprüche

1. Filtereinrichtung (1, 1', 1'' zum Filtrieren einer Suspension (2), umfassend mindestens einen Filter (3) zur kontinuierlichen Erzeugung eines Filterkuchens (4) enthaltend Partikel aus der Suspension (2), wobei der mindestens eine Filter (3) eingerichtet ist, den Filterkuchen (4) nacheinander mindestens einer Dosiereinrichtung (20, 20') zur Aufgabe mindestens einer ersten Waschflüssigkeit (10, 10') auf den Filterkuchen (4) und mindestens einer Bedampfungseinheit (30) zur Bedampfung des Filterkuchens (4) mittels Dampf (31) zuzuführen, **dadurch gekennzeichnet, dass** die mindestens eine Dosiereinrichtung (20, 20') in eine erste Prozesskammer (6) integriert ist und die mindestens eine Bedampfungseinheit (30) in eine zweite Prozesskammer (7) integriert ist, wobei die erste Prozesskammer (6) und die zweite Prozesskammer (7) zumindest durch mindestens eine Trennwand (8, 8a, 8b) voneinander getrennt sind.

2. Filtereinrichtung nach Anspruch 1, **dadurch gekennzeichnet, dass** eine Spaltweite (SW) zwischen dem mindestens einen Filter (3) und der mindestens einen Trennwand (8, 8a, 8b) verstellbar ist.

3. Filtereinrichtung nach Anspruch 2, **dadurch gekennzeichnet, dass** mindestens eine Messeinrichtung (60) zur Erfassung einer Dicke d des Filterkuchens (4) vorhanden ist und die Spaltweite SW zwischen dem mindestens einen Filter (3) und der mindestens einen Trennwand (8, 8a, 8b) in Abhängigkeit der Dicke d des Filterkuchens (4) verstellbar ist.

4. Filtereinrichtung nach einem der Ansprüche 1 bis 3, **dadurch gekennzeichnet, dass** die mindestens eine Trennwand (8, 8a, 8b) an ihrer dem Filter (3) zugewandten Seite mindestens eine bewegliche Dichtungseinheit (8') umfasst.

5. Filtereinrichtung nach Anspruch 4, **dadurch gekennzeichnet, dass** die bewegliche Dichtungseinheit (8') durch eine elastische Dichtlippe gebildet ist.

6. Filtereinrichtung nach einem der Ansprüche 1 bis 5, **dadurch gekennzeichnet, dass** die erste Prozesskammer (6) und die zweite Prozesskammer (7) durch eine Zwischenkammer (9) voneinander getrennt sind, wobei eine erste Trennwand (8a) zwischen der ersten Prozesskammer (6) und der Zwischenkammer (9) und eine zweite Trennwand (8b) zwischen der Zwischenkammer (9) und der zweiten Prozesskammer (7) angeordnet ist.

7. Filtereinrichtung nach Anspruch 6, **dadurch gekennzeichnet, dass** die Zwischenkammer (9) mit mindestens einer Gaszuführleitung (9a) zur Zuführung eines Gases (11) in die Zwischenkammer (9) verbunden ist.

8. Filtereinrichtung nach Anspruch 6 oder 7, **dadurch gekennzeichnet, dass** in der Zwischenkammer (9) und der zweiten Prozesskammer (7) jeweils mindestens ein Gasdrucksensor (12, 12') angeordnet ist.

9. Filtereinrichtung nach einem der Ansprüche 6 bis 8, **dadurch gekennzeichnet, dass** zumindest der zweiten Trennwand (8b) an ihrer der Zwischenkammer (9) zugewandten Seite mindestens ein Temperatursensor (13) zugeordnet ist.

10. Filtereinrichtung nach einem der Ansprüche 1 bis 9, **dadurch gekennzeichnet, dass** der mindestens eine Filter (3) ein Drehfilter ist.

11. Filtereinrichtung nach einem der Ansprüche 1 bis 10, **dadurch gekennzeichnet, dass** der mindestens eine Filter (3) ein Trommelfilter oder ein Scheibenfilter oder ein Panfilter oder ein Bandfilter ist.

12. Verfahren zum Betreiben einer Filtereinrichtung (1, 1', 1'') nach einem der Ansprüche 1 bis 11, **dadurch gekennzeichnet, dass** die mindestens eine erste Waschflüssigkeit (10, 10') und eine zweite Waschflüssigkeit zur Erzeugung des Dampfs (31) um mindestens 5°C unterschiedliche Siedetemperaturen aufweisen.

13. Verfahren nach Anspruch 12, **dadurch gekennzeichnet, dass** die zweite Waschflüssigkeit aus Wasser gebildet wird.

14. Verfahren nach Anspruch 12 oder 13, **dadurch gekennzeichnet, dass** die mindestens eine erste Waschflüssigkeit (10, 10') aus einem organischen Lösungsmittel gebildet wird.

15. Verfahren nach einem der Ansprüche 12 bis 14, **dadurch gekennzeichnet, dass** bei einer Filtereinrichtung gemäß Anspruch 8 mittels der Gasdrucksensoren (12, 12') jeweils ein erster Gasdruck in der Zwischenkammer (9) und ein zweiter Gasdruck in der zweiten Prozesskammer (7) erfasst wird und dass eine Gaszufuhr zur Zwischenkammer (9) derart geregelt wird, dass der erste Gasdruck höher als der zweite Gasdruck ist.

16. Verfahren nach einem der Ansprüche 12 bis 15, **dadurch gekennzeichnet, dass** bei einer Filtereinrichtung gemäß Anspruch 9 mittels des mindestens einen Temperatursensors (13) mindestens eine Temperatur gemessen wird und dass eine Gaszufuhr zur Zwischenkammer (9) und/oder eine Zufuhr von Dampf (31) zur zweiten Prozesskammer (7) in Abhängigkeit von der Temperatur geregelt wird.

17. Verfahren nach einem der Ansprüche 12 bis 16, **dadurch gekennzeichnet, dass** die zu filtrierende Suspension (2) aus Ölsand und mindestens einem organischen Lösungsmittel gebildet wird.

18. Verwendung einer Filtereinrichtung (1, 1', 1'') nach einem der Ansprüche 1 bis 11 zur Extraktion von Kohlenwasserstoffen aus Ölsand, wobei aus dem Ölsand und mindestens einem organischen Lösungsmittel die zu filtrierende Suspension (2) gebildet wird.
